(19) **Europäisches Patentamt / European Patent Office / Office européen des brevets**

(11) **EP 3 206 282 A1**

(12) # EUROPEAN PATENT APPLICATION
published in accordance with Art. 153(4) EPC

(43) Date of publication:
**16.08.2017 Bulletin 2017/33**

(21) Application number: **15861538.5**

(22) Date of filing: **26.08.2015**

(51) Int Cl.:
*H02K 3/48* (2006.01)  *C08K 3/00* (2006.01)
*C08K 7/14* (2006.01)  *C08L 67/06* (2006.01)
*H01F 5/06* (2006.01)

(86) International application number:
**PCT/JP2015/074026**

(87) International publication number:
**WO 2016/080040 (26.05.2016 Gazette 2016/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.11.2014 JP 2014232502**

(71) Applicant: **Showa Denko K.K.**
**Tokyo 105-8518 (JP)**

(72) Inventor: **ISHIUCHI, Ryujin**
**Tokyo 105-8518 (JP)**

(74) Representative: **Regimbeau**
**20, rue de Chazelles**
**75847 Paris Cedex 17 (FR)**

(54) **UNSATURATED POLYESTER RESIN COMPOSITION AND SWITCHED RELUCTANCE MOTOR**

(57)    The present invention provides an unsaturated polyester resin composition for producing a molding resin for use in a switched reluctance motor. The unsaturated polyester resin composition comprises an unsaturated polyester, a crosslinking agent, a curing agent, a low profile additive, a filler, and a reinforcing fibrous material. The content of the filler is from 100 parts by mass to 800 parts by mass with respect to 140 parts by mass of the total of the unsaturated polyester and the crosslinking agent. The filler comprises one or more fillers (filler A) selected from the group consisting of calcium carbonate, glass, silica, talc, clay, barium sulfate, calcium silicate, titanium oxide, and a hollow filler and one or more fillers (filler B) selected from the group consisting of aluminum hydroxide and alumina. The mass ratio of filler B to filler A is 1 or more. The unsaturated polyester resin composition of the present invention is optimal for producing a molding resin for use in a switched reluctance motor, the molding resin barely causing void formation upon sealing, effectively preventing vibration of stator salient poles, and barely generating cracks when vibration and heat are generated during motor operation.

EP 3 206 282 A1

## Description

### TECHNICAL FIELD

The present invention relates to an unsaturated polyester resin composition and a switched reluctance motor.

### BACKGROUND ART

Switched reluctance motors are inexpensive, highly energy efficient, and suitable for mass production, and therefore have been receiving attention.

A switched reluctance motor typically comprises a ring-shaped stator yoke, a plurality of stator salient poles on the inner circumference of the stator yoke, exciting coils on the stator salient poles, a rotatable rotor core arranged coaxially to the stator yoke, and rotor salient poles on the outer circumference of the rotor core. A switched reluctance motor having this structure is made to rotate as follows: a controller applies an electric current to a coil, to thereby excite a corresponding stator salient pole; and the stator salient pole thereby attracts a corresponding rotor salient pole. When a stator salient pole is excited and it attracts a corresponding rotor salient pole, the rotor salient pole also attracts the stator salient pole at the same time. These attracting forces generate distortion in a circumferential direction. When excitation of the stator salient pole ends, a repulsive force is generated between the stator salient pole and the rotor salient pole. This repulsive force also generates distortion in a circumferential direction (opposite to the circumferential direction in the case of the attracting forces). These attracting forces and repulsive forces are repeatedly generated to vibrate the stator salient pole, resulting in vibration of the switched reluctance motor and accompanying noise.

For preventing vibration of the stator salient pole, a method has been proposed in which a molding resin is used to seal the space between adjacent stator salient poles (see Patent Documents 1 and 2, for example).

As a typical resin composition for sealing motor parts, using an unsaturated polyester resin composition is generally known (see Patent Documents 3 to 6, for example).

### REFERENCE

### PATENT DOCUMENTS

[Patent Document 1] JP 2000-60089 A
[Patent Document 2] JP 2003-32979 A
[Patent Document 3] JP 2009-77577 A
[Patent Document 4] JP 2009-77576 A
[Patent Document 5] JP 2001-226573 A
[Patent Document 6] JP 2011-6542 A

### DISCLOSURE OF THE INVENTION

### PROBLEMS TO BE SOLVED BY THE INVENTION

The molding resin for sealing the space between adjacent stator salient poles is intended not only to prevent distortion in the stator salient poles but also to prevent coil disengagement and to highly efficiently dissipate heat generated by coil operation. To fully display these effects, a molding resin must not easily form voids upon sealing, must be difficult to deform under loads such as attracting forces and repulsive forces (hereinafter, this characteristic is also called "deformation resistance" for short), must not generate cracks during thermal cycles (hereinafter, this characteristic is also called "heat-shock resistance" for short), and have high thermal conductivity.

However, a conventional molding resin used in a switched reluctance motor has such problems as having an inadequate effect to prevent vibration of stator salient poles and/or having a tendency to easily generate cracks during thermal cycles.

The conventional unsaturated polyester resin compositions used for sealing motor parts are not intended to cope with stator salient pole vibration, which is a vibration unique to switched reluctance motors, and therefore have an inadequate effects to prevent such vibration.

The present invention has been devised so as to solve these problems. An object of the present invention is to provide an unsaturated polyester resin composition optimal for producing a molding resin for use in a switched reluctance motor, the molding resin barely causing void formation upon sealing, effectively preventing vibration of stator salient poles, and barely generating cracks when vibration and heat are generated during motor operation.

Another object of the present invention is to provide a switched reluctance motor adaptable to noise reduction and adaptable to prevention of coil efficiency deterioration caused by heat.

## MEANS FOR SOLVING THE PROBLEMS

The inventor of the present invention has conducted intensive research to achieve these objects and, as a result, has found that a molding resin having optimal properties for use in a switched reluctance motor can be obtained by using two certain fillers in a certain proportion and also using an unsaturated polyester, a crosslinking agent, a curing agent, a low profile additive, and a reinforcing fibrous material, to thus complete the present invention.

More specifically, the present invention provides the following (1) to (4):

(1) An unsaturated polyester resin composition for producing a molding resin for use in a switched reluctance motor, the unsaturated polyester resin composition comprising:

an unsaturated polyester;
a crosslinking agent;
a curing agent;
a low profile additive;
a filler; and
a reinforcing fibrous material,
the content of the filler being from 200 parts by mass to 800 parts by mass with respect to 140 parts by mass of the total of the unsaturated polyester and the crosslinking agent,
the filler comprising one or more fillers (filler A) selected from the group consisting of calcium carbonate, glass, silica, talc, clay, barium sulfate, calcium silicate, titanium oxide, and a hollow filler and one or more fillers (filler B) selected from the group consisting of aluminum hydroxide and alumina,
the mass ratio of filler B to filler A being 1 or more.

(2) The unsaturated polyester resin composition according to (1), wherein the mass ratio of filler B to filler A is from 1 to 100.

(3) The unsaturated polyester resin composition according to (1) or (2), wherein content of the reinforcing fibrous material is from 10 parts by mass to 130 parts by mass with respect to 140 parts by mass of the total of the unsaturated polyester and the crosslinking agent.

(4) A switched reluctance motor, comprising space between adjacent stator salient poles sealed with the unsaturated polyester resin composition according to any one of (1) to (3).

## EFFECTS OF THE INVENTION

According to the present invention, an unsaturated polyester resin composition optimum for producing a molding resin for use in a switched reluctance motor can be provided. The molding resin barely causes void formation upon sealing, effectively prevents vibration of stator salient poles, and barely generates cracks when vibration and heat are generated during motor operation.

According to the present invention, a switched reluctance motor adaptable to noise reduction and adaptable to prevention of coil efficiency deterioration caused by heat can also be provided.

## BRIEF DESCRIPTION OF THE DRAWINGS

Fig. 1    is a sectional view of a switched reluctance motor.
Fig. 2    is a view for illustrating a method of evaluating deformation resistance.
Fig. 3    illustrates a mold used in a fluidity (spiral flow) test.

## BEST MODE FOR CARRYING OUT THE INVENTION

An unsaturated polyester resin composition of the present invention is used for producing a molding resin for use in a switched reluctance motor.

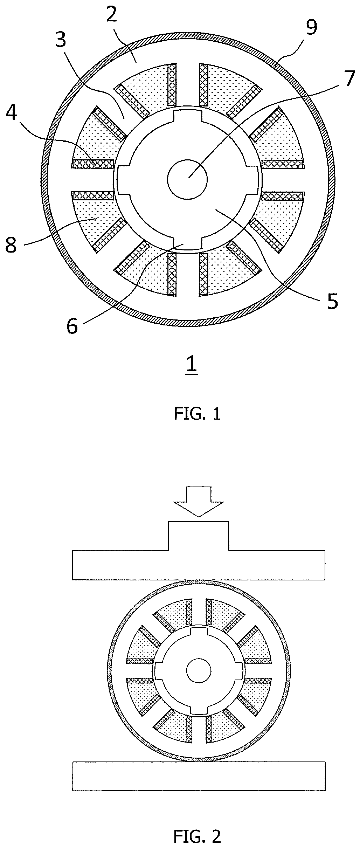

Fig. 1 is a sectional view of a switched reluctance motor. With reference to Fig. 1, a switched reluctance motor 1 comprises a ring-shaped stator yoke 2, a plurality of stator salient poles 3 on the inner circumference of stator yoke 2, an exciting coil 4 on each stator salient pole 3, a rotatable rotor core 5 arranged coaxially to stator yoke 2, and rotor salient poles 6 on the outer circumference of the rotor core. Rotor core 5 has a shaft 7 positioned at the center thereof. The space between adjacent stator salient poles 3 is sealed with a molding resin 8. Stator yoke 2 is covered with a tubular frame 9. Fig. 1 is merely an illustration of a basic structure of switched reluctance motor 1, and switched reluctance motor 1 may further comprise other components known in the art.

The switched reluctance motor 1 having this structure is made to rotate as follows: a controller (not shown) sequentially applies an electric current to coil 4 to thereby excite a corresponding stator salient pole 3; and this stator salient pole 3 thereby attracts corresponding rotor salient pole 6. Repeated on/off excitation cycles generate an attracting force and a repulsive force between stator salient pole 3 and rotor salient pole 6, thereby generating distortion in stator salient pole 3. The distortion in stator salient pole 3 can be prevented by sealing the space between adjacent stator salient poles 3 with molding resin 8. Molding resin 8 is intended not only to prevent disengagement of coil 4 but also to dissipate heat generated by operation of coil 4 with high efficiency.

Molding resin 8 of the present invention is produced by using the unsaturated polyester resin composition. More specifically, molding resin 8 is a cured product of the unsaturated polyester resin composition.

Deformation resistance of molding resin 8 has a correlation with rigidity of molding resin 8. Therefore, enhancement of rigidity of molding resin 8 can enhance deformation resistance of molding resin 8. For this reason, a component of the unsaturated polyester resin composition (the unsaturated polyester resin composition is used for providing molding resin 8) needs to be a selected component capable of providing a cured product having a high rigidity (a high flexural modulus, for example). In addition, heat-shock resistance of molding resin 8 has a correlation with adhesion between a resin and a filler contained in molding resin 8. For this reason, the filler for use in the unsaturated polyester resin composition (the unsaturated polyester resin composition is used for providing molding resin 8) needs to be a selected filler highly adhesive to the unsaturated polyester resin. Furthermore, thermal conductivity of molding resin 8 has a correlation with the type and the content of the filler contained in molding resin 8. For this reason, the type and the content of the filler for use in the unsaturated polyester resin composition (the unsaturated polyester resin composition is used for providing molding resin 8) need to be selected so as to achieve a high thermal conductivity of the resulting cured product.

These viewpoints are to be considered when selecting components of the unsaturated polyester resin composition of the present invention and determining the contents thereof. In the following, the composition of the unsaturated polyester resin composition is described.

The unsaturated polyester resin composition of the present invention comprises at least an unsaturated polyester, a crosslinking agent, a curing agent, a low profile additive, a filler, and a reinforcing fibrous material.

A typical unsaturated polyester is a condensation product produced by esterification reaction from a polyhydric alcohol, an unsaturated polybasic acid, and an optional saturated polybasic acid. The unsaturated polyester is commercially available typically as a solution of an unsaturated polyester resin dissolved in a crosslinking agent (also called "reactive diluent"). The unsaturated polyester resin is generally known in the art and is described in "Polyester Resin Handbook" (published in 1988 by Nikkan Kogyo Shimbun Ltd.) and "Dictionary of Technical Terms of Coating Materials" (published in 1993, edited by Japan Society of Color Material), for example. Examples of commercially available unsaturated polyester resin products include the Rigolac (trademark) products manufactured by SHOWA DENKO K.K.

The polyhydric alcohol used for synthesizing the unsaturated polyester is not particularly limited, and one known in the art may be used. Examples of the polyhydric alcohol include ethylene glycol, propylene glycol, neopentyl glycol, butanediol, diethylene glycol, dipropylene glycol, triethylene glycol, pentanediol, hexanediol, neopentanediol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, hydrogenated bisphenol A, bisphenol A, bisphenol A ethylene oxide adduct, bisphenol A propylene oxide adduct, and glycerin. Among these, propylene glycol, neopentyl glycol, and bisphenol A or hydrogenated bisphenol A are preferable from the viewpoints of heat resistance, mechanical strength, and moldability. One of these polyhydric alcohols may be used alone, or a plurality of these may be used in combination.

The unsaturated polybasic acid used for synthesizing the unsaturated polyester is not particularly limited, and one known in the art may be used. Examples of the unsaturated polybasic acid include maleic anhydride, fumaric acid, maleic acid, citraconic acid, and itaconic acid. One of these unsaturated polybasic acids may be used alone, or a plurality of these may be used in combination. Among these, maleic anhydride and fumaric acid are more preferable from the viewpoints of heat resistance, mechanical strength, and moldability, for example.

The saturated polybasic acid used for synthesizing the unsaturated polyester is not particularly limited, and a known one may be used. Examples of the saturated polybasic acid include phthalic anhydride, isophthalic acid, terephthalic acid, tetrahydrophthalic acid, HET acid, succinic acid, adipic acid, sebacic acid, tetrachlorophthalic anhydride, tetrabromophthalic anhydride, and endomethylene tetrahydrophthalic anhydride. One of these saturated polybasic acids may be used alone, or a plurality of these may be used in combination.

The unsaturated polyester may be synthesized by a known method with the use of the raw materials as described above. Various conditions in the synthesis need to be appropriately set depending on the raw materials to be used and their contents. In general, it suffices to perform esterification at a temperature from 140°C to 230°C under increased or reduced pressure in a stream of an inert gas such as nitrogen gas. In the esterification reaction, an esterification catalyst may be used as required. Examples of the catalyst include known catalysts such as manganese acetate, dibutyltin oxide, stannous oxalate, zinc acetate, and cobalt acetate. One of these catalysts may be used alone, or a plurality of these may be used in combination.

The unsaturated polyester may have glycidyl (meth)acrylate, for example, added to a terminal carboxy group thereof.

The weight average molecular weight (MW) of the unsaturated polyester is not particularly limited and is preferably from 5,000 to 20,000. The term "weight average molecular weight" as used herein means a value determined with a standard polystyrene calibration curve on the basis of measurement by gel permeation chromatography (Shodex GPC-101 manufactured by SHOWA DENKO K.K.) at ordinary temperature (23°C) under the following conditions.
Column: LF-804 manufactured by SHOWA DENKO K.K.
Column temperature: 40°C
Sample: 0.2 mass% copolymer in tetrahydrofuran
Flow rate: 1 mL/minute
Eluent: tetrahydrofuran
Detector: RI-71S

The crosslinking agent is not particularly limited as long as it has an ethylenic double bond polymerizable with the unsaturated polyester, and one known in the art may be used. Examples of the crosslinking agent include styrene monomer, chlorostyrene, vinyltoluene, divinylbenzene, diallyl phthalate monomer, diallyl phthalate prepolymer, methyl (meth)acrylate, ethyl (meth)acrylate, ethylene glycol di(meth)acrylate, and triallyl isocyanurate. One of these crosslinking agents may be used alone, or a plurality of these may be used in combination.

The crosslinking agent may be used as it is as a raw material for the unsaturated polyester resin composition. Alternatively, the unsaturated polyester may be dissolved in the crosslinking agent to prepare the unsaturated polyester resin in advance, which may be used as a raw material for the unsaturated polyester resin composition.

The blending amount of the crosslinking agent is not particularly limited. From the viewpoints of workability, polymerizability, shrinkage of the resulting cured product, and the degree of freedom in amount adjustment, the blending amount of the crosslinking agent is preferably from 10 parts by mass to 200 parts by mass, more preferably from 30 parts by mass to 150 parts by mass, further preferably from 50 parts by mass to 100 parts by mass, with respect to 70 parts by mass of the unsaturated polyester.

The curing agent is not particularly limited, and one known in the art may be used. Examples of the curing agent include peroxides such as ketone peroxides, peroxyketals, hydroperoxides, diallyl peroxide, diacyl peroxide, peroxyesters, and peroxydicarbonate and azo compounds. More specifically, the curing agent may be benzoyl peroxide, dicumyl peroxide, diisopropyl peroxide, ditertiary butyl peroxide, t-butyl peroxybenzoate, 1,1-bis(t-butylperoxy)-3,3,5-trimethylcyclohexane, 2,5-dimethyl-2,5-bis(t-butylperoxy)hexyn-3,3-isopropyl hydroperoxide, t-butyl hydroperoxide, dicumyl peroxide, dicumyl hydroperoxide, acetyl peroxide, bis(4-t-butylcyclohexyl)peroxydicarbonate, diisopropyl peroxydicarbonate, isobutyl peroxide, 3,3,5-trimethylhexanoyl peroxide, lauryl peroxide, azobisisobutyronitrile, azobiscarbonamide, or the like. Among these, dicumyl peroxide, ditertiary butyl peroxide, t-butyl hydroperoxide, and the like that have an excellent storage stability, are preferable. One of these curing agents may be used alone, or two or more thereof may be used in combination.

The blending amount of the curing agent is not particularly limited and may be appropriately set depending on the raw materials to be used. The blending amount of the curing agent is preferably from 0.5 part by mass to 10 parts by mass, more preferably from 0.7 part by mass to 7 parts by mass, further preferably from 1 part by mass to 5 parts by mass, with respect to 140 parts by mass of the total of the unsaturated polyester and the crosslinking agent. On the other hand, when the blending amount of the curing agent is less than 0.5 part by mass, curing may proceed inadequately or may take too long. When the blending amount of the curing agent is more than 10 parts by mass, this excessive curing agent may hamper achieving desired physical properties of the resulting cured product.

The low profile additive is not particularly limited, and one known in the art may be used. Examples of the low profile additive include thermoplastic polymers typically used as a low profile additive, such as polystyrene, polymethyl methacrylate, polyvinyl acetate, styrene-(vinyl acetate) copolymer, saturated polyester, styrene-diene copolymer, cellulose acetate butyrate, cellulose acetate propionate, liquid rubber, and synthetic rubber. One of these low profile additives may be used alone, or two or more thereof may be used in combination.

The low profile additive may be used as it is as a raw material for the unsaturated polyester resin composition. Alternatively, the low profile additive may be dissolved in the crosslinking agent to prepare a solution of the low profile additive in advance, which may be used as a raw material for the unsaturated polyester resin composition. This solution of the low profile additive is commercially available. For example, Styrone 679 manufactured by PS Japan Corporation may be used.

The blending amount of the low profile additive is not particularly limited and may be appropriately set depending on the raw materials to be used. The blending amount of the low profile additive is preferably from 5 parts by mass to 50 parts by mass, more preferably from 10 parts by mass to 45 parts by mass, further preferably from 15 parts by mass to 40 parts by mass, most preferably from 15 parts by mass to 30 parts by mass, with respect to 140 parts by mass of the total of the unsaturated polyester and the crosslinking agent. On the other hand, when the blending amount of the low profile additive is less than 5 parts by mass, the resulting cured product may have a high shrinkage rate, leading to a decrease in dimension accuracy. When the blending amount of the low profile additive is more than 50 parts by mass, mechanical properties of the resulting cured product may be impaired.

The filler comprises two types of fillers, namely, a filler A and a filler B.

Filler A is a component primarily for enhancing deformation resistance and heat-shock resistance of the resulting cured product. Filler A is one or more inorganic fillers selected from the group consisting of calcium carbonate, glass, silica (preferably fused silica), talc, clay, barium sulfate, calcium silicate, titanium oxide, and a hollow filler. The type of the hollow filler is not particularly limited, and one known in the art may be used. Examples of the hollow filler include glass balloons and resin balloons.

Filler B is a component primarily for enhancing thermal conductivity of the resulting cured product. Filler B is one or more inorganic fillers selected from the group consisting of aluminum hydroxide and alumina.

The blending amount of the filler comprising fillers A and B is from 200 parts by mass to 800 parts by mass, preferably from 220 parts by mass to 780 parts by mass, more preferably from 250 parts by mass to 750 parts by mass, with respect to 140 parts by mass of the total of the unsaturated polyester and the crosslinking agent. When the blending amount of the filler is more than 800 parts by mass, viscosity of the unsaturated polyester resin composition increases, resulting in a decrease in workability or the like. On the other hand, when the blending amount of the filler is less than 200 parts by mass, a decrease in deformation resistance, heat-shock resistance, and thermal conductivity of the resulting cured product occurs, whereby the cured product fails to have physical properties optimum for use as molding resin 8.

The mass ratio of filler B to filler A ((mass of filler B)/(mass of filler A)) is 1 or more, preferably from 1 to 100, more preferably from 1.5 to 80, further preferably from 2 to 50, most preferably from 2.5 to 30. Because the thermal conductivity of filler A is smaller than that of filler B, using filler A in an excessive amount leads to a decrease in the thermal conductivity of the resulting cured product, resulting in a decrease in a heat dissipating effect of molding resin 8 and consequently in a decrease in motor efficiency of coil 4. When filler A is used in an excessive amount, the resulting cured product may be too hard, leading to damage being caused to coil 4 and other parts. On the other hand, when filler B is used in an excessive amount, deformation resistance and heat-shock resistance of the resulting cured product may decrease.

The average particle diameter of fillers A and B is not particularly limited but is preferably from 0.5 $\mu$m to 50 $\mu$m, more preferably from 0.7 $\mu$m to 30 $\mu$m. When the average particle diameter of fillers A and B is less than 0.5 $\mu$m, the unsaturated polyester resin composition may have a high viscosity, leading to a decrease in moldability. On the other hand, when the average particle diameter of fillers A and B is more than 50 $\mu$m, mechanical strength of the resulting cured product may remarkably decrease or fluidity of the unsaturated polyester resin composition may decrease, leading to a decrease in moldability.

The term "average particle diameter" of fillers A and B as used herein means a particle diameter calculated from a specific surface area determined by the air permeability method.

$$\text{Average particle diameter} = (6 \times 10000)/((\text{true specific gravity}) \times (\text{specific surface area}))$$

The reinforcing fibrous material is not particularly limited, and one known in the art may be used. Examples of the reinforcing fibrous material include various organic fibers and inorganic fibers, such as glass fiber, pulp fiber, polyethylene terephthalate fiber, vinylon fiber, carbon fiber, aramid fiber, and wollastonite. Among these, chopped strand glass having a fiber length from about 1.5 mm to about 25 mm is preferable. The fiber diameter of the reinforcing fibrous material is preferably from 3 $\mu$m to 25 $\mu$m.

The blending amount of the reinforcing fibrous material is not particularly limited but is preferably from 10 parts by mass to 130 parts by mass, more preferably from 20 parts by mass to 100 parts by mass, further preferably from 30 parts by mass to 80 parts by mass, with respect to 140 parts by mass of the total of the unsaturated polyester and the crosslinking agent. When the blending amount of the reinforcing fibrous material is less than 10 parts by mass, strength of the resulting cured product may decrease, resulting in facilitated void formation. On the other hand, when the blending amount of the reinforcing fibrous material is more than 130 parts by mass, the reinforcing fibrous material does not disperse uniformly in the unsaturated polyester resin composition and thereby a homogeneous molded article can not be produced and coil 4 and other parts may be damaged during molding.

The unsaturated polyester resin composition of the present invention, which comprises the above components as essential components, may further comprise optional components for enhancing various physical properties. These optional components are known in the art, such as a resin component other than the unsaturated polyester, an internal mold releasing agent, a thickening agent, a viscosity depressant, and a pigment. The blending amounts of these optional components are not particularly limited as long as the effects of the present invention are not impaired.

The resin component other than the unsaturated polyester is not particularly limited, and one known in the art may be used. Examples of the resin component other than the unsaturated polyester include polyester (meth)acrylate resins, urethane (meth)acrylate resins, and diallyl phthalate resins. One of these resin components other than the unsaturated polyester may be used alone, or two or more thereof may be used in combination.

The mold releasing agent is not particularly limited, and one known in the art may be used. Examples of the mold releasing agent include stearic acid, zinc stearate, calcium stearate, aluminum stearate, magnesium stearate, and carnauba wax. A special internal mold releasing agent commercially available (BYK-P9050 (trade name) manufactured by BYK Japan KK) may also be used. One of these mold releasing agents may be used alone, or two or more thereof may be used in combination.

The thickening agent is not particularly limited, and one known in the art may be used. Examples of the thickening agent include metal oxides such as magnesium oxide, magnesium hydroxide, calcium hydroxide, and calcium oxide and isocyanate compounds. One of these thickening agents may be used alone, or two or more thereof may be used in combination.

The unsaturated polyester resin composition of the present invention comprising these components described above can be produced by a method typically adopted in the art, for instance, by kneading with a kneader or the like.

The unsaturated polyester resin composition of the present invention provides a cured product with excellent deformation resistance (rigidity), excellent heat-shock resistance, and high thermal conductivity and is thereby optimum for use for producing molding resin 8 in switched reluctance motor 1.

The method of molding the unsaturated polyester resin composition is not particularly limited and may be a method typically adopted in the art, such as compression molding, transfer molding, or injection molding.

**EXAMPLES**

The present invention is hereinafter described in more detail by way of Examples and Comparative Examples. However, the present invention is by no means limited to the descriptions of the Examples and Comparative Examples.

Various physical properties in these Examples and Comparative Examples were evaluated as follows.

(1) Flexural modulus

An unsaturated polyester resin composition was subjected to compression molding using a mold of 80 mm × 10 mm × 4 mm under conditions of a molding temperature of 150°C, a molding pressure of 10 MPa, and a molding time of 3 minutes. A specimen for flexural modulus measurement was thereby prepared. The resulting specimen for flexural modulus measurement was subjected to flexural modulus measurement with an AUTOGRAPH (trademark) AG-X (manufactured by Shimadzu Corporation) on the basis of JIS K 6911 (1995) "general testing methods for thermosetting plastics" at 23°C.

(2) Evaluation of void formation

In fabrication of a switched reluctance motor having the structure shown in Fig. 1, the space between adjacent stator salient poles was sealed with an unsaturated polyester resin composition. The sealing was conducted under conditions of a molding temperature of 150°C, a molding pressure of 10 MPa, and a molding time of 3 minutes. The sealed portion was then visually examined for void formation. The evaluation was conducted as follows: a specimen having no void in the sealed portion was evaluated as ◎; a specimen having a void of less than 1 mm was evaluated as ○; a specimen having a void of 1 mm or more and less than 3 mm was evaluated as Δ; and a specimen having a void of 3 mm or more was evaluated as ×.

(3) Evaluation of deformation resistance

A switched reluctance motor having the structure shown in Fig. 1 was fabricated with the space between adjacent stator salient poles sealed with an unsaturated polyester resin composition. The sealing was conducted under conditions of a molding temperature of 150°C, a molding pressure of 10 MPa, and a molding time of 3 minutes. Then, the resulting switched reluctance motor was positioned as shown in Fig. 2, followed by application of a load of 10 t (applied in the direction of the arrow). The degree of deformation (the degree of displacement of a load cell) was measured with an AUTOGRAPH (trademark) AG-X (manufactured by Shimadzu Corporation). The evaluation was conducted as follows: a specimen having deformation of less than 200 $\mu$m was evaluated as ○; a specimen having deformation of 200 $\mu$m or more and less than 400 $\mu$m was evaluated as $\Delta$; and a specimen having deformation of 400 $\mu$m or more was evaluated as $\times$.

(4) Evaluation of heat-shock resistance

A switched reluctance motor having the structure shown in Fig. 1 was fabricated with the space between adjacent stator salient poles sealed with an unsaturated polyester resin composition. The sealing was conducted under conditions of a molding temperature of 150°C, a molding pressure of 10 MPa, and a molding time of 3 minutes. Then, the resulting switched reluctance motor was subjected to a thermal cycle of -40°C for 2 hours and 150°C for 2 hours in a cold-hot thermal shock chamber TSA-71L (manufactured by ESPEC). This thermal cycle was repeated 300 times. The sealed portion was then visually examined for cracks. The evaluation was conducted as follows: a specimen having no crack in the sealed portion was evaluated as ○; a specimen having a crack of less than 10 mm was evaluated as $\Delta$; and a specimen having a crack of 10 mm or more was evaluated as $\times$.

(5) Thermal conductivity

An unsaturated polyester resin composition was subjected to compression molding under conditions of a molding temperature of 150°C, a molding pressure of 10 MPa, and a molding time of 15 minutes to prepare a flat specimen of 150 mm x 150 mm $\times$ 20 mm. Thermal conductivity of the resulting flat specimen was measured by the QTM method (the tester used was a QTM-500 manufactured by Kyoto Electronics Manufacturing Co., Ltd. (QTM-DII manufactured by SDK)).

(6) Fluidity (spiral flow)

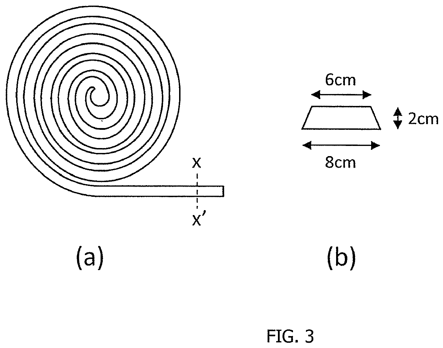

A mold shown in Fig. 3 was used for transfer molding of an unsaturated polyester resin composition under conditions of a molding temperature of 130°C, a molding pressure of 5 MPa, and a molding time of 15 minutes. The distance over which the unsaturated polyester resin composition flowed within the mold was measured and defined as fluidity of the unsaturated polyester resin composition. Fig. 3(a) is a top view of the mold, and Fig. 3(b) is an expanded view of the cross section at the line x-x' in Fig. 3(a). When the distance over which the unsaturated polyester resin composition flowed is small, moldability is low and thereby it is difficult to seal the space between adjacent stator salient poles.

(Example 1)

In a double-arm kneader, the following components were homogeneously kneaded: 100 parts by mass of an unsaturated polyester resin having a styrene monomer content of 30% by mass (Rigolac (trademark) M-500D manufactured by SHOWA DENKO K.K., having an MW of unsaturated polyester of 7000); 3 parts by mass of t-butyl peroxybenzoate (hereinafter, called "TBPO" for short, Perbutyl (trademark) Z manufactured by NOF Corporation) as a curing agent; 80 parts by mass of a solution of polystyrene diluted in a styrene monomer (Styrone 679 manufactured by PS Japan Corporation, having a polystyrene content of 50% by mass and a styrene monomer content of 50% by mass) as a low profile additive; 50 parts by mass of calcium carbonate (KS-1200A manufactured by Dowa Calfine Co., Ltd., having an average particle diameter of 2 $\mu$m) and 250 parts by mass of aluminum hydroxide (H-34 manufactured by SHOWA DENKO K.K., having an average particle diameter of 4 $\mu$m) as a filler; 40 parts by mass of glass fiber (CS 3PE907 manufactured by Nitto Boseki Co., Ltd., having a fiber length of 3 mm and a fiber diameter of 13 $\mu$m) as a reinforcing fiber; and 15 parts by mass of zinc stearate as an internal mold releasing agent. An unsaturated polyester resin composition was thereby obtained.

(Example 2)

An unsaturated polyester resin composition was obtained in the same manner as in Example 1 except that 150 parts by mass of calcium carbonate (KS-1200A manufactured by Dowa Calfine Co., Ltd., having an average particle diameter of 2 $\mu$m) and 150 parts by mass of aluminum hydroxide (H-34 manufactured by SHOWA DENKO K.K., having an average particle diameter of 4 $\mu$m) were used as a filler.

(Example 3)

An unsaturated polyester resin composition was obtained in the same manner as in Example 1 except that 30 parts by mass of calcium carbonate (KS-1200A manufactured by Dowa Calfine Co., Ltd., having an average particle diameter of 2 μm) and 300 parts by mass of aluminum hydroxide (H-34 manufactured by SHOWA DENKO K.K., having an average particle diameter of 4 μm) were used as a filler.

(Example 4)

An unsaturated polyester resin composition was obtained in the same manner as in Example 1 except that 40 parts by mass of glass fiber (CS 6PE907 manufactured by Nitto Boseki Co., Ltd., having a fiber length of 6 mm and a fiber diameter of 13 μm) was used as a reinforcing fiber.

(Example 5)

An unsaturated polyester resin composition was obtained in the same manner as in Example 1 except that 20 parts by mass of calcium carbonate (KS-1200A manufactured by Dowa Calfine Co., Ltd., having an average particle diameter of 2 μm) and 180 parts by mass of aluminum hydroxide (H-34 manufactured by SHOWA DENKO K.K., having an average particle diameter of 4 μm) were used as a filler.

(Example 6)

An unsaturated polyester resin composition was obtained in the same manner as in Example 1 except that 50 parts by mass of calcium carbonate (KS-1200A manufactured by Dowa Calfine Co., Ltd., having an average particle diameter of 2 μm), 200 parts by mass of aluminum hydroxide (H-34 manufactured by SHOWA DENKO K.K., having an average particle diameter of 4 μm), and 500 parts by mass of alumina (AL-47-1 manufactured by SHOWA DENKO K.K., having an average particle diameter of 4 μm) were used as a filler.

(Example 7)

An unsaturated polyester resin composition was obtained in the same manner as in Example 1 except that 30 parts by mass of calcium carbonate (KS-1200A manufactured by Dowa Calfine Co., Ltd., having an average particle diameter of 2 μm) and 270 parts by mass of aluminum hydroxide (H-34 manufactured by SHOWA DENKO K.K., having an average particle diameter of 4 μm) were used as a filler and 10 parts by mass of glass fiber (CS 3PE907 manufactured by Nitto Boseki Co., Ltd., having a fiber length of 3 mm and a fiber diameter of 13 μm) was used as a reinforcing fiber.

(Example 8)

An unsaturated polyester resin composition was obtained in the same manner as in Example 1 except that 20 parts by mass of calcium carbonate (KS-1200A manufactured by Dowa Calfine Co., Ltd., having an average particle diameter of 2 μm), 170 parts by mass of aluminum hydroxide (H-34 manufactured by SHOWA DENKO K.K., having an average particle diameter of 4 μm), and 10 parts by mass of alumina (AL-47-1 manufactured by SHOWA DENKO K.K., having an average particle diameter of 4 μm) were used as a filler and 130 parts by mass of glass fiber (CS 3PE907 manufactured by Nitto Boseki Co., Ltd., having a fiber length of 3 mm and a fiber diameter of 13 μm) was used as a reinforcing fiber.

(Example 9)

An unsaturated polyester resin composition was obtained in the same manner as in Example 1 except that 3 parts by mass of calcium carbonate (KS-1200A manufactured by Dowa Calfine Co., Ltd., having an average particle diameter of 2 μm) and 297 parts by mass of aluminum hydroxide (H-34 manufactured by SHOWA DENKO K.K., having an average particle diameter of 4 μm) were used as a filler.

(Example 10)

An unsaturated polyester resin composition was obtained in the same manner as in Example 1 except that 50 parts by mass of barium sulfate (precipitated barium sulfate 300 manufactured by Sakai Chemical Industry Co., Ltd., having an average primary particle diameter of 0.7 μm) and 250 parts by mass of aluminum hydroxide (H-34 manufactured by SHOWA DENKO K.K., having an average particle diameter of 4 μm) were used as a filler.

(Example 11)

An unsaturated polyester resin composition was obtained in the same manner as in Example 1 except that 50 parts by mass of fused silica (S-C12U manufactured by Nippon Steel & Sumikin Materials Co., Ltd., having an average particle diameter of 10 μm) and 250 parts by mass of aluminum hydroxide (H-34 manufactured by SHOWA DENKO K.K., having an average particle diameter of 4 μm) were used as a filler.

(Comparative Example 1)

An unsaturated polyester resin composition was obtained in the same manner as in Example 1 except that 300 parts by mass of aluminum hydroxide (H-34 manufactured by SHOWA DENKO K.K., having an average particle diameter of 4 μm) alone was used as a filler and no low profile additive was blended.

(Comparative Example 2)

An unsaturated polyester resin composition was obtained in the same manner as in Example 1 except that 300 parts by mass of aluminum hydroxide (H-34 manufactured by SHOWA DENKO K.K., having an average particle diameter of 4 μm) alone was used as a filler and no reinforcing fiber was blended.

(Comparative Example 3)

An unsaturated polyester resin composition was obtained in the same manner as in Example 1 except that 297 parts by mass of calcium carbonate (KS-1200A manufactured by Dowa Calfine Co., Ltd., having an average particle diameter of 2 μm) and 3 parts by mass of aluminum hydroxide (H-34 manufactured by SHOWA DENKO K.K., having an average particle diameter of 4 μm) were used as a filler.

(Comparative Example 4)

The same procedure as in Example 1 was conducted except that 300 parts by mass of aluminum hydroxide (H-34 manufactured by SHOWA DENKO K.K., having an average particle diameter of 4 μm) alone was used as a filler and 150 parts by mass of glass fiber (CS 3PE907 manufactured by Nitto Boseki Co., Ltd., having a fiber length of 3 mm and a fiber diameter of 13 μm) was used as a reinforcing fiber. It was impossible to homogeneously knead the raw materials, and no unsaturated polyester resin composition was successfully obtained.

(Comparative Example 5)

The same procedure as in Example 1 was conducted except that 850 parts by mass of aluminum hydroxide (H-34 manufactured by SHOWA DENKO K.K., having an average particle diameter of 4 μm) alone was used as a filler. It was impossible to homogeneously knead the raw materials, and no unsaturated polyester resin composition was successfully obtained.

(Comparative Example 6)

An unsaturated polyester resin composition was obtained in the same manner as in Example 1 except that 50 parts by mass of calcium carbonate (KS-1200A manufactured by Dowa Calfine Co., Ltd., having an average particle diameter of 2 μm) and 100 parts by mass of aluminum hydroxide (H-34 manufactured by SHOWA DENKO K.K., having an average particle diameter of 4 μm) were used as a filler.

The unsaturated polyester resin compositions obtained in Examples 1 to 11 and Comparative Examples 1 to 3 and 6 were subjected to evaluations (1) to (5) described above. Results are shown in Tables 1 and 2. As for Comparative Examples 4 and 5, no unsaturated polyester resin composition was successfully prepared and therefore none of evaluations (1) to (5) were conducted.

[Table 1]

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Unsaturated polyester | | 70 | 70 | 70 | 70 | 70 | 70 | 70 | 70 | 70 | 70 | 70 |
| Styrene monomer (crosslinking agent) | | 70 | 70 | 70 | 70 | 70 | 70 | 70 | 70 | 70 | 70 | 70 |
| TBPO (Curing agent) | | 3 | 3 | 3 | 3 | 3 | 3 | 3 | 3 | 3 | 3 | 3 |
| Polystyrene (low profile additive) | | 40 | 40 | 40 | 40 | 40 | 40 | 40 | 40 | 40 | 40 | 40 |
| Calcium carbonate (filler A) | | 50 | 150 | 30 | 50 | 20 | 50 | 30 | 20 | 3 | - | - |
| Barium sulfate (filler A) | | - | - | - | - | - | - | - | - | - | 50 | - |
| Fused silica (filler A) | | - | - | - | - | - | - | - | - | - | - | 50 |
| Aluminum hydroxide (filler B) | | 250 | 150 | 300 | 250 | 180 | 200 | 270 | 170 | 297 | 250 | 250 |
| Alumina (filler B) | | - | - | - | - | - | 500 | - | 10 | - | - | - |
| Glass fiber (reinforcing fiber) | Fiber length 3 mm | 40 | 40 | 40 | - | 40 | 40 | 10 | 130 | 40 | 40 | 40 |
| | Fiber length 6 mm | - | - | - | 40 | - | - | - | - | - | - | - |
| Zinc stearate (internal mold releasing agent) | | 15 | 15 | 15 | 15 | 15 | 15 | 15 | 15 | 15 | 15 | 15 |
| Mass ratio (filler B/filler A) | | 5 | 1 | 10 | 5 | 9 | 14 | 9 | 9 | 99 | 5 | 5 |
| (1) Flexural modulus (GPa) | | 8 | 8 | 8 | 9 | 7 | 12 | 6 | 14 | 8 | 7 | 7 |
| (2) Evaluation of void formation | | ◎ | ◎ | ○ | ◎ | Δ | ○ | Δ | ○ | Δ | ○ | ○ |
| (3) Evaluation of deformation resistance | | ○ | ○ | ○ | ○ | Δ | ○ | Δ | ○ | ○ | ○ | ○ |
| (4) Evaluation of heat-shock resistance | | ○ | ○ | ○ | ○ | ○ | Δ | ○ | Δ | ○ | ○ | ○ |
| (5) Thermal conductivity (W/m·K) | | 0.8 | 0.7 | 0.9 | 0.8 | 0.6 | 1.3 | 0.7 | 1.1 | 1.0 | 0.8 | 0.8 |
| (6) Fluidity (cm) | | 61 | 51 | 64 | 53 | 69 | 56 | 71 | 58 | 46 | 63 | 74 |

[Table 2]

| | | Comparative Examples | | | | | |
|---|---|---|---|---|---|---|---|
| | | 1 | 2 | 3 | 4 | 5 | 6 |
| Unsaturated polyester | | 70 | 70 | 70 | 70 | 70 | 70 |
| Styrene monomer (crosslinking agent) | | 30 | 70 | 70 | 70 | 70 | 70 |
| TBPO (Curing agent) | | 3 | 3 | 3 | 3 | 3 | 3 |
| Polystyrene (low profile additive) | | - | 40 | 40 | 40 | 40 | 40 |
| Calcium carbonate (filler A) | | - | - | 297 | - | - | 50 |
| Aluminum hydroxide (filler B) | | 300 | 300 | 3 | 300 | 850 | 100 |
| Glass fiber (reinforcing fiber) | Fiber length 3 mm | 40 | - | 40 | 150 | 40 | 40 |
| Zinc stearate (internal mold releasing agent) | | 15 | 15 | 15 | 15 | 15 | 15 |
| Mass ratio (filler B/filler A) | | - | - | 0.01 | - | - | 2 |
| (1) Flexural modulus (GPa) | | 9 | 6 | 8 | - | - | 6 |
| (2) Evaluation of void formation | | ○ | Δ | ○ | - | - | Δ |
| (3) Evaluation of deformation resistance | | ○ | Δ | ○ | - | - | Δ |

(continued)

| | Comparative Examples | | | | | |
|---|---|---|---|---|---|---|
| | 1 | 2 | 3 | 4 | 5 | 6 |
| (4) Evaluation of heat-shock resistance | ✕ | ✕ | ○ | - | - | ○ |
| (5) Thermal conductivity (W/m·K) | 0.8 | 0.4 | 0.5 | - | - | 0.4 |
| (6) Fluidity (cm) | 66 | 73 | 39 | - | - | 72 |

As shown in Tables 1 and 2, the unsaturated polyester resin compositions of Examples 1 to 11 gave excellent results in all of evaluations (1) to (5) but the unsaturated polyester resin compositions of Comparative Examples 1 to 3 and 6 did not give a satisfactory result in at least one of evaluations (1) to (5).

As proven from these results, the present invention can provide an unsaturated polyester resin composition optimum for producing a molding resin for use in a switched reluctance motor, the molding resin barely causing void formation upon sealing, effectively preventing vibration of stator salient poles, and barely generating cracks when vibration and heat are generated during motor operation. It is also proven from these results that the present invention can provide a switched reluctance motor adaptable to noise reduction and adaptable to prevention of coil efficiency deterioration caused by heat.

This international application claims priority from Japanese Patent Application No. 2014-232502, filed on November 17, 2014, the entire disclosure of which is incorporated herein by reference.

## REFERENCE SIGNS LIST

1: switched reluctance motor, 2: stator yoke, 3: stator salient pole, 4: coil, 5: rotor core, 6: rotor salient pole, 7: shaft, 8: molding resin, 9: frame

## Claims

1.  An unsaturated polyester resin composition for producing a molding resin for use in a switched reluctance motor, the unsaturated polyester resin composition comprising:

    an unsaturated polyester;
    a crosslinking agent;
    a curing agent;
    a low profile additive;
    a filler; and
    a reinforcing fibrous material,
    content of the filler being from 200 parts by mass to 800 parts by mass with respect to 140 parts by mass of the total of the unsaturated polyester and the crosslinking agent,
    the filler comprising one or more fillers (filler A) selected from the group consisting of calcium carbonate, glass, silica, talc, clay, barium sulfate, calcium silicate, titanium oxide, and a hollow filler and one or more fillers (filler B) selected from the group consisting of aluminum hydroxide and alumina,
    mass ratio of filler B to filler A being 1 or more.

2.  The unsaturated polyester resin composition according to claim 1, wherein the mass ratio of filler B to filler A is from 1 to 100.

3.  The unsaturated polyester resin composition according to claim 1 or 2, wherein content of the reinforcing fibrous material is from 10 parts by mass to 130 parts by mass with respect to 140 parts by mass of the total of the unsaturated polyester and the crosslinking agent.

4.  A switched reluctance motor, comprising space between adjacent stator salient poles sealed with the unsaturated polyester resin composition according to any one of claims 1 to 3.

FIG. 1

FIG. 2

(a)

(b)

6cm

2cm

8cm

FIG. 3

## INTERNATIONAL SEARCH REPORT

| International application No. |
| --- |
| PCT/JP2015/074026 |

A. CLASSIFICATION OF SUBJECT MATTER
*H02K3/48(2006.01)i, C08K3/00(2006.01)i, C08K7/14(2006.01)i, C08L67/06
(2006.01)i, H01F5/06(2006.01)i*

According to International Patent Classification (IPC) or to both national classification and IPC

B. FIELDS SEARCHED

Minimum documentation searched (classification system followed by classification symbols)
H02K3/48, C08K3/00, C08K7/14, C08L67/06, H01F5/06

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2012/017646 A1  (Panasonic Corp.),<br>09 February 2012 (09.02.2012),<br>paragraphs [0020] to [0057], [0066]; fig. 3<br>(Family: none) | 1-2<br>3-4 |
| Y | JP 53-70330 A  (Hitachi, Ltd.),<br>22 June 1978 (22.06.1978),<br>claim 4; page 2, lower left column, lines 7 to 13<br>(Family: none) | 3-4 |
| Y | JP 2001-349294 A  (NIDEC Shibaura Corp.),<br>21 December 2001 (21.12.2001),<br>claims 1 to 4; fig. 2<br>(Family: none) | 4 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>     17 November 2015 (17.11.15) | Date of mailing of the international search report<br>     01 December 2015 (01.12.15) |
| --- | --- |
| Name and mailing address of the ISA/<br>     Japan Patent Office<br>     3-4-3,Kasumigaseki,Chiyoda-ku,<br>     Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/074026

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2012/081151 A1  (Panasonic Corp.), 21 June 2012 (21.06.2012), paragraphs [0023] to [0069]; table 2 & US 2013/0264896 A1 paragraphs [0027] to [0081]; table 2 | 1-2 |
| X | WO 2012/101977 A1  (Panasonic Corp.), 02 August 2012 (02.08.2012), paragraphs [0016] to [0062]; table 3 & US 2013/0300224 A1 paragraphs [0020] to [0063]; table 3 &  EP 2669336 A1 | 1-2 |
| A | JP 2004-120923 A  (Hitachi, Ltd.), 15 April 2004 (15.04.2004), abstract; claims 1 to 4 & US 2004/0061386 A1 abstract; claims 1 to 4 & US 2005/0285456 A1    & EP 1404006 A1 | 1-4 |
| A | JP 4186930 B2  (Matsushita Electric Works, Ltd.), 26 November 2008 (26.11.2008), table 1 (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000060089 A
- JP 2003032979 A
- JP 2009077577 A
- JP 2009077576 A

- JP 2001226573 A
- JP 2011006542 A
- JP 2014232502 A

**Non-patent literature cited in the description**

- Polyester Resin Handbook. Nikkan Kogyo Shimbun Ltd, 1988

- Dictionary of Technical Terms of Coating Material. 1993